# EUROPEAN PATENT SPECIFICATION

(11) **EP 3 772 426 B1**
(45) Date of publication and mention of the grant of the patent: **03.04.2024**
(21) Application number: 20189630.5
(22) Date of filing: 05.08.2020
(51) Int. Cl.: B60K 17/24

(54) **SUPPORT SYSTEM FOR A VEHICLE TRANSMISSION SHAFT AND RELATED MOUNTING METHOD FOR A VEHICLE TRANSMISSION SHAFT**
LAGERUNGSSYSTEM FÜR EINE FAHRZEUG-GETRIEBEWELLE UND ENTSPRECHENDES MONTAGEVERFAHREN FÜR EINE FAHRZEUG-GETRIEBEWELLE
SYSTEME DE SUPPORT POUR UN ARBRE DE TRANSMISSION DE VEHICULE ET PROCEDE DE MONTAGE CORRESPONDANT POUR UN ARBRE DE TRANSMISSION DE VEHICULE

(30) Priority: 08.08.2019 IT 201900014424
(43) Date of publication of application: 10.02.2021
(73) Proprietor: Iveco S.p.A., 10156 Torino (IT)
(72) Inventor: DAL COL, Vittorio, 10099 SAN MAURO TORINESE (TO) (IT); TONELLO, Massimo, 10072 CASELLE TORINESE (TO) (IT)
(74) Representative: Studio Torta S.p.A.

(56) References cited:
- CN-A- 107 054 078
- CN-U- 203 331 830
- DE-T2- 69 116 845
- DE-T2- 69 116 845
- KR-B1- 101 693 893
- KR-B1- 101 693 893

## Description

### TECHNICAL FIELD

The invention relates to a support system for a transmission shaft of a vehicle, in particular to a support system for a transmission shaft of a commercial or heavy vehicle.

### KNOWN STATE OF THE ART

Every vehicle provided with an internal combustion engine and with a rearwheel drive comprises a rotary transmission shaft, which is configured to transfer the torque from the engine to one or more axles of the vehicle.

In particular, for commercial or heavy vehicles, said transmission shaft can be particularly long and, for this reason, it is normally divided into a plurality of transmission shafts, which are connected to one another through joints, for example universal joints.

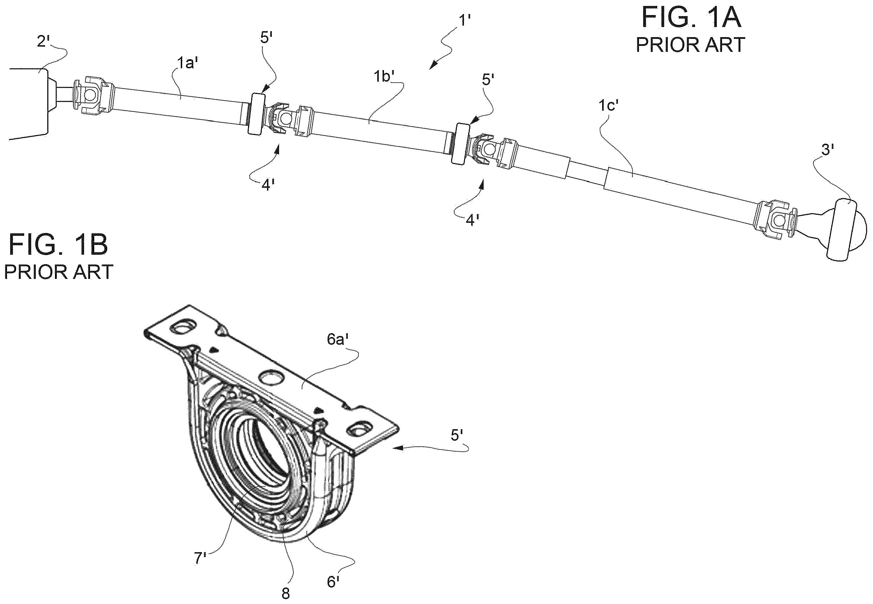

An example of this assembly of rotary shafts 1' placed between a gear-box 2' and an axle 3' of a vehicle of the aforesaid type is shown in figure 1A.

In the case shown therein, the assembly of rotary shafts 1' comprises three rotary shafts, in particular a first rotary shaft 1a', a second rotary shaft 1b' and a third rotary shaft 1c'; in particular, the first rotary shaft 1a' is connected, through respective joints 4', to the gear-box 2' and to the second rotary shaft 1b', the latter is connected, through a further joint, to the third rotary shaft 1c', which, in turn, is connected, through a further joint 4', to the axle 3'.

In order to connect the shaft system 1' to a frame (not shown) of the vehicle, a plurality of supports 5' are provided, which are configured to support, in a rotationally free manner, at least one of the aforesaid shafts 1a', 1b' and 1c'. In this case, the first and the second shafts 1a', 1b' are connected to the frame by means of respective supports 5'.

The supports, shown in figure 1B, basically comprise an outer structure 6' carrying a rotary support 7'. Between the rotary support 7' and the outer structure 6' there is a damping material 8'. The outer structure 6' comprises a fixing plate 6a', which is configured to be connected, for example through threaded elements, to the frame of the vehicle. This fixing, after having been carried out, cannot obviously be adjusted in any direction relative to the respective shaft 1a', 1b'; this can only slightly happen in an axial or radial direction because of the deformation ability of the damping material 8'.

Furthermore, each shaft 1a', 1b' needs to be mounted at a specific height relative to the frame of the vehicle. Since every support 6' has a fixed height and, due to cost reasons, frames usually comprise cross members with the same dimensions, in order to vertically adjust the position of the supports 6', spacers (not shown) are usually used, which can be placed between the fixing plate 6a' and the relative cross member of the frame.

However, said spacers cannot ensure a correct distance relative to the frame, since they are standardized in terms of dimensions.

The method currently used to assemble the shaft system 1' basically comprises:
- On the overturned frame, mounting all the shafts 1a', 1b', 1c' of the shaft system 1' relative to frame thanks to the supports 6', with the respective spacers;
- Mounting the axle 3' and connecting the input flange thereof to the flange of the shaft 1c'. It should be pointed out that the axle 3' can easily be mounted, since the third shaft 1c' normally comprises a spline coupling relative to the bridge, which allows some incorrect tolerances to be balanced in a longitudinal direction relative to the third shaft 1c'.
- Overturning the frame with the shaft system 1' mounted on it; and
- Mounting the gear-box 2' and connecting the output flange thereof to the flange of the shaft 1a'.

However, since, in order to secure the shafts 1a', 1b', 1c' to the frame before overturning it, the supports 6' are fixed to the frame, the shaft system 1' is substantially fixed relative to it.

The connection of the shaft 1a' to the gear-box 2' is not as simple the connection to the axle 3', since the longitudinal position of the first shaft 1a' can be only slightly changed by deforming the damping material 8' with the application of a load that is proportional to the deformation itself.

Furthermore, this system makes it impossible, in case of use of rubber joints between the gear-box 2' and the transmission, to move the shaft 1a' back by some dozens of mm needed to allow the pin for the radial centring of the shaft to be introduced into the seat. Therefore, a centring flange needs to be introduced, with a consequent increase in the weight and in the costs of the system.

Furthermore, an incorrect tolerance in terms of inclination of the supports or longitudinal positioning thereof generates misalignments between the flange of the gear-box and the joint 4' of the first shaft 1a'.

These misalignments cause tensions that tend to reduce the fatigue life of the damping material 8' and produce noise and vibrations. These tensions generate an axial force acting upon the flange of the gear-box, which could not be acceptable for many types of gear-boxes.

Furthermore, the fitting of the spacers implies a delicate selection of the correct dimensions thereof and a relative storage of a large number of spacers with different dimensions. Hence, the selection and fitting of the spacers as well as the use thereof increases assembling times and costs for the known shaft system 1'.

Further examples of known support systems are disclosed in documents CN107054078 A, DE694116845 T2, KR 101693893 B1 or CN203331830 U.

Therefore, known support systems for transmission shafts 1' need to be improved so as to solve the technical problems explained above.

The object of the invention is to fulfil the needs discussed above in an optimized and economic fashion.

### SUMMARY OF THE INVENTION

The aforesaid object is reached by a support system and a relative mounting method using said support system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1A is a schematic side view of a rotary shaft system according to the prior art;
- Figure 1B is a perspective view of a support for a rotary shaft according to the prior art;
- Figure 2 is a perspective view of a rotary shaft support system according to the invention;
- Figure 3 is an exploded perspective view of the support system of figure 2;
- Figure 4 is a side view of the support system of figure 2 cooperating with a rotary shaft system;
- Figure 5A is perspective view of the support according to the invention in a first operating configuration;
- Figure 5B is perspective view of the support according to the invention in a second operating configuration; and
- Figure 6 is a cross section view of the support of figure 5A.

### DETAILED DESCRIPTION OF THE INVENTION

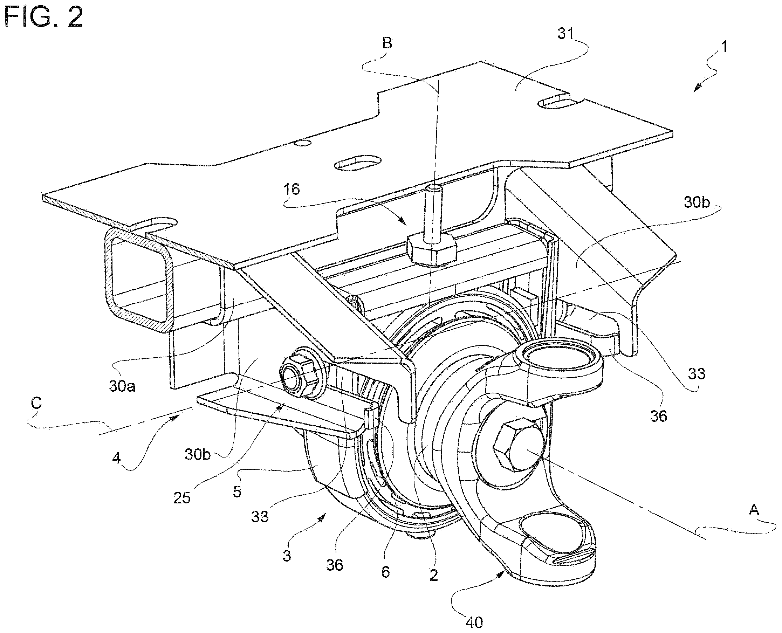

Figure 2 shows a support system 1 for a rotary shaft 2 according to the invention and basically comprising a support 3 and a housing element 4 for the support 3. The support system 1 is configured to permit the adjustment of the position of the support 3 relative to the housing element 4 and, hence, of the rotary shaft 2 according to three degrees of freedom, as described more in detail below.

The degrees of freedom specifically comprise a linear movement of the support 3 along a longitudinal axis A of the rotary shaft 2, a linear movement of the support 3 along an axis B perpendicular to the axis A and a rotation of the support 3 around a transverse axis C perpendicular to the aforesaid axes A and B.

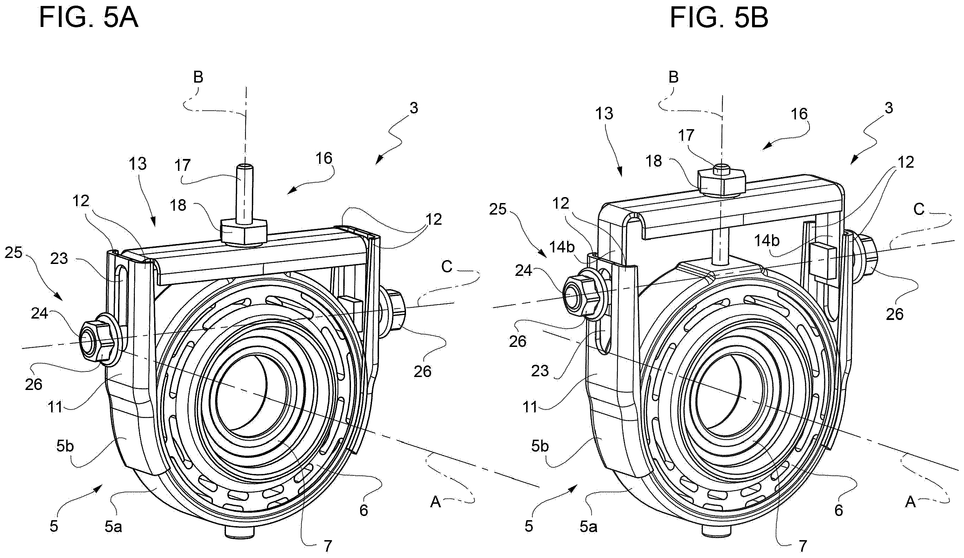

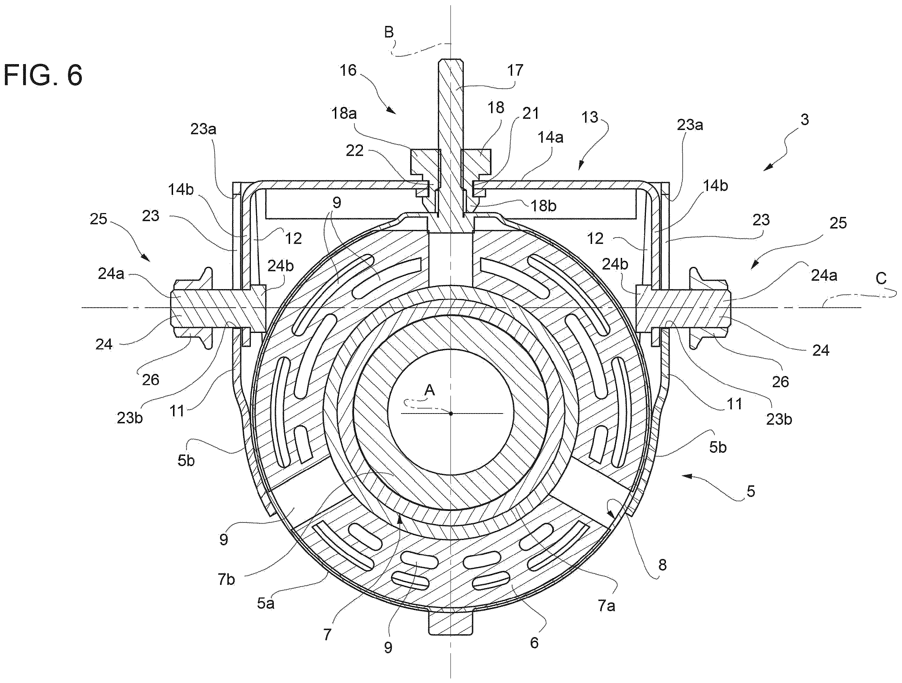

With reference to figures 5A, 5B and 6, the support 3 is shown, which basically comprises an external structure 5, a damper 6 and a rotating support 7; the external structure 5 is configured to house, on the inside, the damper 6 and the rotating support 7, as described more in detail below.

In particular, the external structure 5 comprises a circular portion 5a with axis A, which is coaxial to the rotating shaft 2, houses and defines a cylindrical housing 8, which is axially open and is radially delimited by the circular portion 5a.

The external structure 5 further comprises a pair of lateral projections 5b extending from the outer edge of the circular portion 5a parallel to the axis B in an opposite direction relative to the of the rotary shaft 2.

In the case described herein, the lateral projections 5b extend parallel to the axis B in a tangent manner relative to the circular portion 5a and are preferably manufactured as separate elements relative to the latter and are fixed to it, for example through welding.

Furthermore, each lateral projection 5b comprises a bottom wall 11, which is tangent relative to the central portion 5a, and a pair of lateral walls 12, which extend from the bottom wall 11 perpendicularly to it in the direction of the axis A.

According to figure 6, the cylindrical housing 8 is configured to house, on the inside, the damper 6 and the rotating support 7. The damper 6 is a known damper, is made of a polymer material, has a substantially annular shape with dimensions that are such that the outer surface thereof can adhere to the inner surface of the circular portion 5a and defines a housing to support the rotating support 7. As it is known, furthermore, the damper 6 comprises a plurality of openings 9, which are configured to give the damper 6 a suitable elasticity. The damper 6 will not be further described, for the sake of brevity, as it is already known.

The rotating support 7 basically comprises a fixed portion 7a, which is provided with an outer portion adhering to an inner surface of the damper 6, and a rotating portion 7b, which is fixed to the shaft 2. In the case described herein, the rotating support 7 comprises a bearing.

The support 1 further comprises a mobile portion 13, which is configured to cooperate, in a sliding manner, with the external structure 5, in particular with the lateral projections 5b. In particular, the mobile portion 13 basically comprises a central wall 14a with a substantially rectangular shape and a pair of lateral walls 14b extending perpendicularly relative to the central wall 14a starting from the lateral end edges thereof. The central wall 14a and the lateral walls 14b are advantageously manufactured as one single piece.

The lateral walls 14b are configured to cooperate, in a sliding manner, inside the space delimited by the bottom wall 11 and the lateral walls 12 of the projections 5b and their extension along the axis A is such that the mobile portion 13 can assume a first configuration (figure 5A), in which the central wall 14a is at a minimum distance relative to the central portion 5a, and a second configuration (figure 5B), in which the central wall 14a is at a maximum distance relative to the central portion 5a.

Owing to the above, the movement of the mobile portion 13 relative to the projections 5b is linear along the axis A; indeed, the lateral walls 14b are contained by the lateral walls 12 of the projections 5b, which, hence, substantially create a linear guide for the lateral walls 14b.

The support 3 further comprises movement means 16, which are configured to move the mobile portion 13 relative to the external structure 5 so that it assumes all the positions between the two limit configurations described above and shown in figures 5A-5B.

The movement means 16 can advantageously comprise threaded means. In the case described herein, the movement means comprise a first threaded element 17 carried by the external structure 5 and a second threaded element 18 configured to cooperate with the first threaded element 18 and carried by the mobile portion 13.

More in detail, the first threaded element 17 comprises a screw, which extends coaxial to the axis B from an apex end portion of the central portion 5b of the outer structure 5, to which it is fixed, for example, through welding, and goes through the central wall 14 of the mobile portion 13. More in detail, again, the second threaded element 18 comprises a nut-screw, which is externally coaxial to the aforesaid screw, has a thread that is such as to cooperate with the thread of the latter and is carried, in a rotationally free manner, by the central wall 14 of the mobile portion 13.

Owing to the above, the central wall 14 defines an opening 21, which is configured to house the nut-screw and the screw on the inside. In particular, the nut-screw comprises an upper portion 18a defining the threaded coupling with the screw and a lower portion 18b, separated by a groove 22, configured to cooperate in a sliding manner, rotating along the axis B, with the central wall 14. The lower portion 18b has greater dimensions than the hole 21 so as to define a snapping coupling with the mobile portion 13. In this way, the nut-screw cannot move along the axis B, but can only rotate around it.

Each one of the end portions 5b further defines a slot 23, which is obtained in the bottom wall 11 and extends longitudinally to it. Therefore, the slot 23 is delimited, along the axis A, by an upper stop wall 23a and by a lower stop wall 23b. On the other hand, the slot 23 is laterally delimited so as to permit the passage of a pin 24, which is carried by a substantially terminal portion of the lateral walls 14b of the mobile portion 13.

In particular, the pin 24 comprises a main portion 24a going through the slot 23 and extending parallel to the axis C on the outside thereof and an end portion 24b with greater dimensions than the slot 23 and placed on the opposite side relative to the slot 23 so as to prevent the pin 24 from freely moving outwards.

The support 1 further comprises a thrust element 26, which is carried on the pin 24 in a linearly mobile manner, and clamping means 25, which are configured to change the distance between the thrust element 26 and the bottom wall 11.

In the case described herein, the clamping means 25 comprise threaded means and, preferably, the pin 24 is threaded like a screw and the thrust element 26 comprises a nut having a thread that is complementary to the one of the pin 24. As a consequence, the thrust element 26, by rotating, can move along the axis C defined by the pin 24.

It should be pointed out that the mobile portion 13 is free to rotate around the axis C defined by the pair of pins 24. In particular, with reference to the condition of figure 5B, the external structure 5 and all the elements contained by it can clearly pivot relative to the mobile portion 13.

As already mentioned above, the housing element 4 is configured to support the support 3, as described below and shown in figures 2, 3 and 4.

The housing element 4 basically comprises a bracket 30, which is configured to be fixed to a cross member 31 of the frame of the vehicle. In particular, the bracket 30 comprises a fixing portion 30a, which is configured to allow the bracket 30 to be fixed to the cross member 31, which, in the case described herein, has an "L"-shaped cross section. The bracket 30 further comprises a pair of arms 30b, which are carried by the fixing portion 30a and extend from opposite ends thereof, in the case described herein, from the concave portion of the aforesaid "L"-shaped section.

The arms 30b are spaced apart from one another so as to allow the support 3 to be housed. Furthermore, the arms 30b each define a guide 33, which is configured to house, in a sliding manner, the pins 24 of the support 3 described above, when it is inserted between them. In particular, each guide 33 comprises an input portion 33a and a linear portion 33b extending longitudinally inside the respective arm 30b.

In the example described herein, the arms 30b substantially have the shape of a right trapezoid, in which the inclined side faces the cross member 31 and the lower side is linear. The arms 30b advantageously comprise a main wall extending, as already mentioned above, from the central portion 30a and a reinforcement wall joining the aforesaid single wall. More in detail, according to a projection on the axis A, the arms 30b comprise the two aforesaid walls, which join one another so as to form a "V" shape and are flared along the axis A, from a maximum dimension of said walls, in the area where they join the central portion 30a, to a minimum dimension thereof, at the opposite end.

The aforesaid guide 33 is advantageously obtained in the main wall of each arm 30b and, more precisely, the access portion 33a communicates with the outside through the lower edge of the main wall, whereas the longitudinal portion 33b is obtained in the main wall, but spaced apart from the access portion 33a.

In the embodiment described herein, the guide 33 is "L"-shaped and, hence, defines three main positions for the pin 24, namely an input position 33' defined on the lower edge of the main wall of each arm 30b, an angular position 33" at the crossing between the access portion 33a and the longitudinal portion 33b and an end position 33‴ at the end of the longitudinal portion 33b on the opposite side relative to the input and angular positions 33', 33".

Once the pin 24 has been inserted, through the rotation of the aforesaid nut, it can be locked in a desired position along the longitudinal portion 33b of the guide 33.

The housing element 4 further comprises stopping means 35, which are configured to limit a possible travel of the pin 24 so as to prevent it from getting out of the input portion 33a.

In particular, the stopping means 35 comprise a flap 36, which is carried by the main wall of the arm 30b and is sized so as to allow the pin 24 to be inserted, when the clamping means 25 do not reduce the space between them and the wall 11 of the mobile portion 13 of the support 3, and limit the movement thereof, when the clamping means 25 change said space by reducing it. In particular, according to the description, when the nut is not rotated on the pin 24, the support 3 can get into and out of the guide 33, otherwise the flap 36 prevents it from moving past the angular position 33".

In particular, in the case described herein, the flap 36 is obtained by bending a free end of the main wall of the arm 30b defining the guide 33 in the direction of the opposite arm 30b.

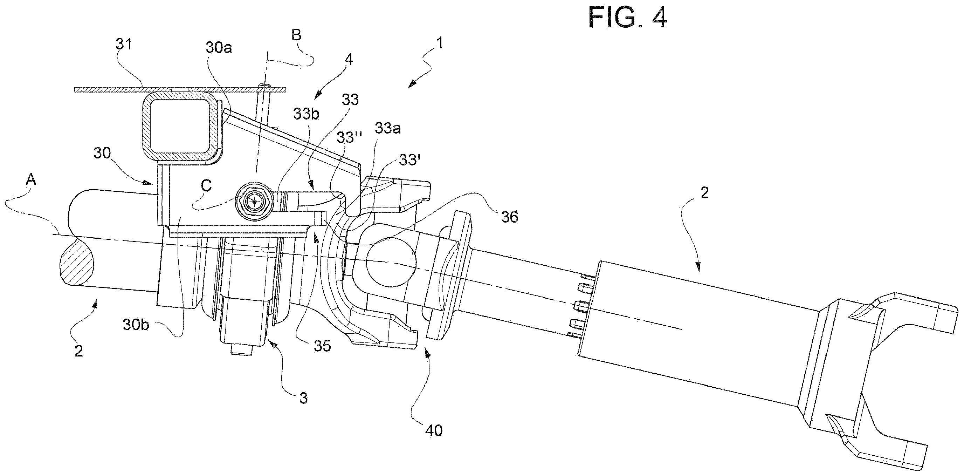

In a use condition shown in figure 4, the rotating shaft 2 is fixed on the inside of the rotating support 7 of the support 3, which, in turn, is carried by the housing element 4. Hence, the shaft 2 can keep extending past the support 7 or, like in the case described herein, be connected to another shaft 2 by means of a joint 40.

The embodiment of the support 3 and of the support system described above works as follows.

During a first step, which is not shown, the shaft support is mounted on the shaft 2.

Before the installation on the overturned frame, the distance between the axis A of the rotation shaft 2 and the axis C, i.e. from the pins 24, can conveniently be adjusted by means of the movement means 16, namely by acting upon the second threaded element 18. In this way, since the pins 24 are fixed and, therefore, the mobile element 13 is fixed, the nut-screw tends to move, through the screw, the external support 5 and, hence, lower (or lift) the shaft 2 along the axis B.

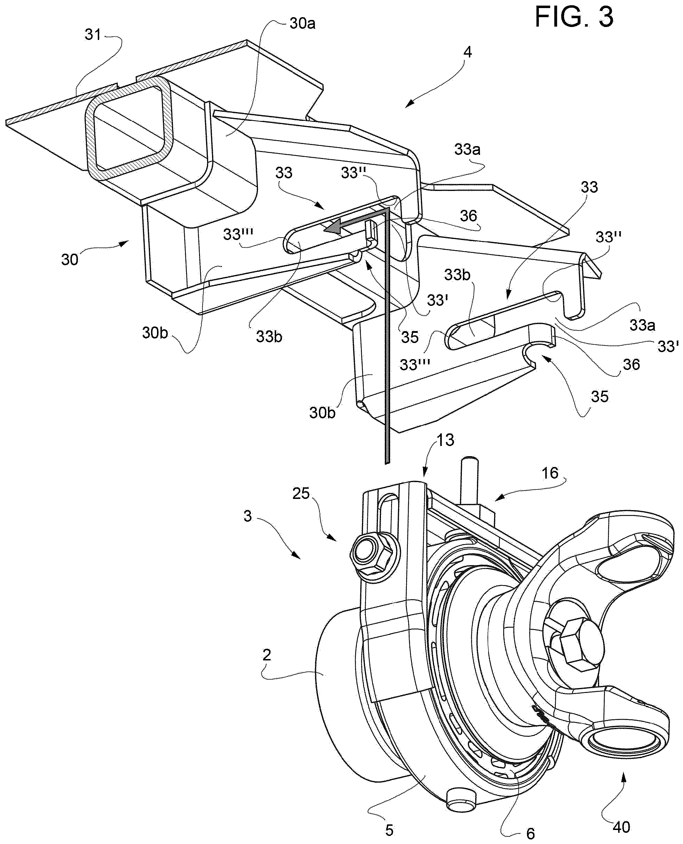

According to figure 3, then, the support 3 is moved so as to get into the guide 33 and longitudinally place itself in the provided position along the relative longitudinal portion 33b, for example in the end portion 33‴, as shown in figures 3 and 4.

During this operation, the clamping means 25 are not clamped and, therefore, the distance between the thrust element 26 and the wall 11 of the mobile portion 13 does not reach its maximum value. By so doing, the support 3 can be inserted into the guide 33 without interference with the stopping means 35.

Once inserted in the longitudinal portion, the clamping means 25 can be partially clamped, so as to allow the shaft 2 to move along the axis A, namely so that the pins 24 can place themselves in a different intermediate position between the positions 33" and 33‴, though without getting out of the angular position 33". Indeed, since the clamping means are partially clamped, the stopping means 35 interfere, if necessary, with the thrust element 26, thus stopping its movement towards the output portion 33a.

As to the inclination of the axis A around the axis C, it is automatically put in the least pulling condition for the damping element, since the pins 24, as they are not completely clamped by the means 35, can allow the mobile portion 13 to move relative to the external support 5.

Once the flanges of the shaft have been connected to the flanges of the axle and of the gear-box, then the support 3 can completely be fixed to the housing element 4 by completely clamping the clamping means 25, namely by compressing on opposite sides - and, hence, fixing through friction - the walls 11 of the mobile portion 13, the lateral walls 5b of the external support 5 and the main wall of the arm 30b.

If, during use, there is an excess load along the axis B, for example a strong thrust towards the ground, the fact that the slot 23 is closed at the top forbids a free and uncoupling movement of the mobile portion 13 relative to the external structure 5.

If, during use, there is an excess load along the axis A, for example a strong thrust due to a sudden acceleration, the fact that the stopping means 35 prevent the clamping means 25 from moving when they are clamped prevents the pins 24 from getting out of the guide 33.

Thanks to the device described above, it is also possible to use an alternative mounting method to mount a rotating shaft system, which is part of the invention and is described below.

In particular, the mounting method to mount a system of rotating shafts 2 by means of a support system 1 of the type described above comprises the steps of:
- Placing the pins 24 of the support 3 in the respective guides 33 of the housing element 4, while keeping the frame of the vehicle overturned;
- Partially clamping the clamping means 25 so that the thrust means 26 prevent the pins 24 from getting out of the guide 33;
- Mounting an axle of the vehicle and the relative suspension and connecting the rear flange of the shaft to the input flange of the axle;
- Overturning the frame of the vehicle;
- Mounting an engine and a gear-box of the vehicle;
- Connecting the input flange of rotating shafts 2 to the output flange of the gear-box;
- adjusting possible clearances along the axis A of said support 3, along the axis B and around the axis C of said support 3 relative to the housing element 4;
- Completely clamping the clamping means 25 so as to lock the support 3 relative to the housing element 4.

The method can further comprise the preliminary steps of:
- Inserting a rotating shaft 2 inside a support 3; and/or
- Pre-adjusting the height of the axis A 2 relative to a design value by acting upon the movement means 16.

In particular, the adjustment of possible clearances along the axis A, along the axis B and around the axis C can comprise at least one of the following operations:
- Adjusting the position of the pins 24 along the guides 33;
- Adjusting the position of the pins 24 relative to the fixed element 31 relative to the frame by acting upon the moving means 16; and
- Adjusting the inclination of the external structure 5 relative to the mobile portion 13 around the axis C.

Owing to the above, the advantages of a system for rotating shafts and of a relative method for mounting said shafts according to the invention are evident.

Thanks to the support system 1, the shaft can make large movements in a longitudinal direction, thus allowing, in case of use of rubber joints, the pin for the radial centring of the shaft to be introduced into the seat avoiding the use of an additional centring flange, which leads to a significant cost decrease.

Thanks to the support system 1, furthermore, the position of a rotating shaft 2 can be adjusted according to three degrees of freedom. In this way, it is possible to avoid mounting drawbacks and the tensions generated by them upon shifting of the vehicle and in the damper 6 of the support 3.

In particular, the support 3 is compact and has a shape that is substantially similar to the one of known systems, so that no further changes to the equipment of the vehicle in the frame are needed.

More in detail, the movement along the axis B avoids the use of the prior art spacers mentioned above and the need to adjust the support to different types and positions of cross members.

Moreover, the movement along the axis A or around the axis C avoids the above-mentioned tensions upon shifting of the vehicle and in the damper 6 of the support 3.

The use of clamping means 25 and threaded elements 16 to adjust the position of the support 3 along the aforesaid degrees of freedom is simple and easy.

In addition, it is possible to offer shafts 2 with a pre-adjusted support 3, thus reducing the times needed to mount the shaft system 2 on the frame of the vehicle.

The fact that the slots 23 are closed and the guides 33 are provided with stopping means 35 allows the support 3 to be moved along the axes A and B in a safe manner, even in case of overloads of the shafts that can give sudden impulses to the support system 1. In this way, the shaft 2 is always kept connected to the frame.

Furthermore, the mounting method that can be used thanks to the aforesaid support is less time-consuming and more economic.

Indeed, the shaft system can be mounted in a safe manner, with no preliminary fixing. The shaft system 2 can be adjusted in a practically automatic manner; indeed, once all the necessary elements are mounted, the weight of the rotating shafts 2 tends to self-balance the system relative to the aforesaid three degrees of freedom. Then, the clamping means 25 simply need to be clamped in order to secure the ideal configuration.

The clamping will be very quick, since the thrust elements 26, namely the nuts, are already mounted on the pins 24.

Furthermore, the aforesaid time and cost reductions are obtained by eliminating the times of those steps that are no longer needed, for example the spacer selection, position and adjusted steps, as well as by eliminating screws and spacers, which are now absent.

Finally, it is clear that the support system for rotating shafts and the relative shaft mounting method according to the invention can be subjected to changes and variants, which, though, do not go beyond the scope of protection set forth in the appended claims.

For example, the shape of the bracket 30 or the features of the rotating support 7 or of the damper 6 can be changed based on the type of vehicle and shaft 2.

Moreover, in some applications, the slots 23 could be open at the top and the stopping means 35 could be absent.

Finally, the movement means 16, the clamping means 25 or the stopping means 35 could be replaced by elements having the same function.

## Claims

1. A support system (1) for a shaft (2) of a vehicle, said support system (1) comprising a support (3) and a housing element (4), the latter being configured to be fixed to an element (30) fixed with respect to a frame of said vehicle, said support (3) being configured to support said shaft (2) in a rotationally free manner, said support (3) and said housing element (4) cooperating with one another to define a first configuration, wherein said support (3) is fixed with respect to said housing element (4) and a second configuration in which said support (3) is carried by said housing element (4) in a mobile manner with respect to three degrees of freedom,
**characterized in that** said degrees of freedom of said support (3) comprise a linear movement along a longitudinal axis A of said shaft (2), a linear movement along an axis B perpendicular to said axis A and a rotation around an axis C perpendicular to said axes A and B,
wherein said housing element (4) comprises a pair of arms (30b) fixable to said element (30) fixed with respect to said frame, said arms (30b) being spaced from one another to house said support (3) therein and defining respective guides (33) extending along said axis A,
said support (3) comprising an external structure (5) configured to house said shaft (2) therein in a rotating manner and a mobile portion (13) in a linear manner along said axis B with respect to said external structure (5), said support (3) comprising a portion (13) mobile with respect to said external structure (5) and a pair of pins (24) carried rigidly by said mobile portion (13), said pins (24) being configured to cooperate in contact with said arms (30b) inside said guides (33) to move along said axis A and to enable a rotation of said support (3) with respect to said housing element (4) around said axis C.

2. The support system according to claim 1, comprising clamping means (25) configured to couple said mobile element (13), said external structure (5) and said arms (30b) to one another by friction,
when said elements are decoupled from one another, said support (3) is free to move along the said three degrees of freedom with respect to said housing element (4),
when said elements are coupled to one another, said support (3) is fixed with respect to said housing element (4).

3. The system according to claim 2, wherein said clamping means (25) comprise threaded elements.

4. The system according to claim 2 or 3, wherein said clamping means (25) comprise a thrust element (26) configured to move linearly along the respective pin (24).

5. The system according to one of the claims from 2 to 5, wherein said support (3) comprises movement means (16) configured to move said mobile portion (13) with respect to said external structure (5).

6. The system according to claim 5, wherein said movement means (16) comprise threaded elements.

7. The system according to claim 5 or 6, wherein said movement means (16) comprise a screw (17) carried by one between said mobile portion (13) and said external structure (5) and a nut-screw (18) carried by the other between said mobile portion (13) and said external structure (5), said screw (17) and said nut-screw (17, 18) cooperating with one another to move said mobile portion (13) with respect to said external structure (5).

8. The system according to one of the claims from 1 to 7, wherein said external structure (5) defines a pair of slots (23) configured to house said pins (24) in the movement of said mobile portion (13) along said axis B with respect to said external structure (5), each of said slots defining a top end stroke (23a) and a bottom end stroke (23b) configured to limit said movement of said mobile portion (13) along said axis B.

9. The system according to one of the claims from 2 to 8, comprising stopping means (35) configured to selectively enable said support (3) to exit said guides (33) of said housing element (4).

10. The system according to claim 10, wherein said stopping means (35) comprise a flap (36) sized so as to enable the insertion of said support (3) in said guides (33) when said clamping means (25) are not clamped and to prevent said support (3) from exiting said guides (33) when said clamping means (25) are at least partially clamped.

11. The support system according to one of the preceding claims wherein said support (3) comprises a rotating support (7) for said shaft (2) and dampening means (8) interposed between said rotating support (7) and said external structure (5).

12. A vehicle comprising a frame and a shaft (2) fixed to said frame by means of at least a support system according to one of the preceding claims.

13. A method for mounting a system of rotating shafts (2) through a support system (1) according to any one of the preceding claims and comprising the steps of:
• Positioning pins (24) of said support (3) in the respective guides (33) of said housing element (4), by keeping a frame of said vehicle overturned;
• Partially clamping the clamping means (25) so that the thrust means (26) prevent said pins (24) from exiting said guides (33);
• Overturning said frame of said vehicle;
• Mounting an engine and gear-box of said vehicle on said frame;
• Mounting said system of rotating shafts (2) to said engine and gear-box;
• Adjusting possible clearances along the axis A of said rotating shafts (2), along the axis B and around the axis C of said supports (3) with respect to said housing element (4); and
• Completely clamping said clamping means (25) in order to lock said support (3) with respect to said housing element (4).

14. The method according to claim 13, further comprising at least one of the following preliminary steps of:
• Mounting said support (3) on a shaft (2);
• Pre-recording the height of said axis A with respect to a drawing value acting on said movement means (16).

15. The method according to claim 13 or 14, wherein said adjustment comprises at least one of the following operations:
• Adjusting the position of said pins (24) along said guides (33);
• Adjusting the position between said pins (24) and said element (30) fixed to said frame;
• Adjusting the inclination around the axis C of said support (3) with respect to said housing element (4).

## Patentansprüche

1. Lagerungssystem (1) für eine Welle (2) eines Fahrzeugs, welches Lagerungssystem (1) ein Lager (3) und ein Gehäuseelement (4) umfasst, wobei letzteres dazu ausgebildet ist, an einem Element (30) befestigt zu werden, welches an einem Rahmen des Fahrzeugs befestigt ist, wobei das Lager (3) dazu ausgebildet ist, die Welle (2) frei drehbar zu lagern, und das Lager (3) und das Gehäuseelement (4) miteinander derart zusammenwirken, dass sie eine erste Konfiguration definieren, in welcher das Lager (3) in Bezug auf das Gehäuseelement (4) befestigt ist, und eine zweite Konfiguration, in welcher das Lager (3) durch das Gehäuseelement (4) in Bezug auf drei Freiheitsgrade beweglich getragen wird,
**dadurch gekennzeichnet, dass** die Freiheitsgrade des Lagers (3) eine lineare Bewegung entlang einer Längsachse A der Welle (2), eine lineare Bewegung entlang einer Achse B senkrecht zur Achse A und eine Drehung um eine Achse C senkrecht zu den Achsen A und B umfassen, wobei das Gehäuseelement (4) ein Paar von Armen (30b) umfasst, die an dem Element (30), welches an dem Rahmen befestigt ist, zu befestigen sind, wobei die Arme (30b) voneinander beabstandet sind, um das Lager (3) zwischen sich aufzunehmen und jeweils Führungen (33) begrenzen, die sich entlang der Achse A erstrecken, wobei das Lager (3) eine äußere Struktur (5) umfasst, ausgebildet zur Aufnahme der Welle (2) darin in frei drehbarer Weise, und einen linear entlang der Achse B in Bezug auf die äußere Struktur (5) beweglichen Teil (13), wobei das Lager (3) einen Teil (13) umfasst, der bezüglich der äußeren Struktur (5) beweglich ist, und ein Paar von Stiften (24), die starr vom beweglichen Teil (13) getragen werden, welche Stifte (24) dazu ausgebildet sind, in Kontakt mit den Armen (30b) innerhalb der Führungen (33) zusammenzuwirken, um sich entlang der Achse A zu bewegen und eine Drehung des Lagers (3) in Bezug auf das Gehäuseelement (4) um die Achse C zu ermöglichen.

2. Lagerungssystem gemäß Anspruch 1, umfassend Klemmmittel (25), ausgebildet zur Kopplung des beweglichen Elements (13), der äußeren Struktur (5) und der Arme (30b) miteinander durch Reibung,
wobei dann, wenn die Elemente voneinander entkoppelt sind, das Lager (3) entlang der drei Freiheitsgrade in Bezug auf das Gehäuseelement (4) frei beweglich ist,
und dann, wenn die Elemente miteinander gekoppelt sind, das Lager (3) in Bezug auf das Gehäuseelement (4) befestigt ist.

3. System gemäß Anspruch 2, bei welchem die Klemmmittel (25) Gewindeelemente umfassen.

4. System gemäß Anspruch 2 oder 3, bei welchem die Klemmmittel (25) ein Druckelement (26) umfassen, ausgebildet zur linearen Bewegung entlang des jeweiligen Stiftes (24).

5. System gemäß einem der Ansprüche 2 bis 5, bei welchem das Lager (3) Bewegungsmittel (16) umfasst, ausgebildet zur Bewegung des beweglichen Teils (13) in Bezug auf die äußere Struktur (5).

6. System gemäß Anspruch 5, bei welchem die Bewegungsmittel (16) Gewindeelemente umfassen.

7. System gemäß Anspruch 5 oder 6, bei welchem die Bewegungsmittel (16) eine Schraube (17) umfassen, die von einem von dem beweglichen Teil (13) und der externen Struktur (5) getragen wird, und eine Mutter (18), die von dem anderen von dem beweglichen Teil (13) und der externen Struktur (5) getragen wird, wobei die Schraube (17) und die Mutter (17, 18) miteinander zusammenwirken, um den beweglichen Teil (13) in Bezug auf die äußere Struktur (5) zu bewegen.

8. System gemäß einem der Ansprüche 1 bis 7, bei welchem die äußere Struktur (5) ein Paar von Schlitzen (23) begrenzt, ausgebildet zur Aufnahme der Stifte (24) in der Bewegung des beweglichen Teils (13) entlang der Achse B bezüglich der äußeren Struktur (5), wobei jeder der Schlitze ein oberes Anschlagsende (23a) und ein unteres Anschlagsende (23b) begrenzt, ausgebildet zur Begrenzung der Bewegung des beweglichen Teils (13) entlang der Achse B.

9. System gemäß einem der Ansprüche 2 bis 8, umfassend Anschlagsmittel (35), ausgebildet, um selektiv einen Austritt des Lagers (3) aus den Führungen (33) des Gehäuseelements (4) zu ermöglichen.

10. System gemäß Anspruch 10, bei welchem die Anschlagsmittel (35) eine Klappe (36) umfassen, die derart bemessen ist, dass sie den Einsatz des Lagers (3) in die Führungen (33) ermöglicht, wenn die Klemmmittel (25) nicht geklemmt sind, und einen Austritt des Lagers (3) aus den Führungen (33) zu verhindern, wenn die Klemmmittel (25) zumindest teilweise geklemmt sind.

11. Lagersystem gemäß einem der vorhergehenden Ansprüche, bei welchem das Lager (3) ein Drehlager (7) für die Welle (2) und Dämpfungsmittel (8) zwischen dem Drehlager (7) und der äußeren Struktur (5) umfasst.

12. Fahrzeug, umfassend einen Rahmen und eine Welle (2), die an dem Rahmen durch zumindest ein Lagerungssystem gemäß einem der vorhergehenden Ansprüche befestigt ist.

13. Verfahren zur Befestigung eines Systems von Rotationswellen (2) durch ein Lagerungssystem (1) gemäß einem der vorhergehenden Ansprüche, umfassend die folgenden Schritte:
- Positionierung der Stifte (24) des Lagers (3) in den jeweiligen Führungen (33) des Gehäuseelements (4), wobei ein Rahmen des Fahrzeugs umgedreht gehalten wird,
- teilweises Klemmen der Klemmmittel (25), so dass die Druckmittel (26) die Stifte (24) am Austreten aus den Führungen (33) hindern;
- Umdrehen des Rahmens des Fahrzeugs,
- Montage eines Motors und eines Getriebes des Fahrzeugs an dem Rahmen;
- Montage des Systems von Rotationswellen (2) an dem Motor und dem Getriebe;
- Einstellung möglicher Spielräume entlang der Achse A der Rotationswellen (2), entlang der Achse B und um die Achse C der Lager (3) bezüglich des Gehäuseelements (4); und
- vollständiges Klemmen der Klemmmittel (25), um das Lager (3) in Bezug auf das Gehäuseelement (4) zu blockieren.

14. Verfahren gemäß Anspruch 13, ferner umfassend zumindest einen der folgenden vorläufigen Schritte:
- Montage des Lagers (3) auf einer Welle (2);
- Voraufzeichnung der Höhe der Achse A bezüglich eines Zugwerts, der auf die Bewegungsmittel (16) wirkt.

15. Verfahren gemäß Anspruch 13 oder 14, wobei die Einstellung zumindest einen der folgenden Vorgänge umfasst:
- Einstellung der Position der Stifte (24) entlang der Führungen (33);
- Einstellung der Position zwischen den Stiften (24) und dem am Rahmen befestigten Element (30);
- Einstellung der Neigung des Lagers (3) bezüglich des Gehäuseelements (4) um die Achse C.

## Revendications

1. Système de support (1) pour un arbre (2) d'un véhicule, ledit système de support (1) comprenant un support (3) et un élément de logement (4), ce dernier étant configuré pour être fixé à un élément (30) fixe par rapport à un châssis dudit véhicule, ledit support (3) étant configuré pour supporter ledit arbre (2) d'une manière sans rotation, ledit support (3) et ledit élément de logement (4) coopérant l'un avec l'autre pour définir une première configuration, dans lequel ledit support (3) est fixe par rapport audit élément de logement (4), et une seconde configuration dans laquelle ledit support (3) est porté par ledit élément de logement (4) d'une manière mobile par rapport à trois degrés de liberté,
**caractérisé en ce que** lesdits degrés de liberté dudit support (3) comprennent un déplacement linéaire le long d'un axe longitudinal A dudit arbre (2), un déplacement linéaire le long d'un axe B perpendiculaire audit axe A et une rotation autour d'un axe C perpendiculaire auxdits axes A et B,
dans lequel ledit élément de logement (4) comprend une paire de bras (30b) pouvant être fixés audit élément (30) fixe par rapport audit châssis, lesdits bras (30b) étant espacés l'un de l'autre pour loger ledit support (3) à l'intérieur et définissant des guides (33) respectifs s'étendant le long dudit axe A,
ledit support (3) comprenant une structure externe (5) configurée pour loger ledit arbre (2) à l'intérieur de celle-ci d'une manière rotative et une partie mobile (13) d'une manière linéaire le long dudit axe B par rapport à ladite structure externe (5), ledit support (3) comprenant une partie (13) mobile par rapport à ladite structure externe (5) et une paire de broches (24) portées rigidement par ladite partie mobile (13), lesdites broches (24) étant configurées pour coopérer en contact avec lesdits bras (30b) à l'intérieur desdits guides (33) pour se déplacer le long dudit axe A et pour permettre une rotation dudit support (3) par rapport audit élément de logement (4) autour dudit axe C.

2. Système de support selon la revendication 1, comprenant des moyens de serrage (25) configurés pour coupler ledit élément mobile (13), ladite structure externe (5) et lesdits bras (30b) les uns aux autres par frottement,
lorsque lesdits éléments sont découplés les uns des autres, ledit support (3) est libre de se déplacer le long desdits trois degrés de liberté par rapport audit élément de logement (4),
lorsque lesdits éléments sont couplés les uns aux autres, ledit support (3) est fixe par rapport audit élément de logement (4).

3. Système selon la revendication 2, dans lequel lesdits moyens de serrage (25) comprennent des éléments filetés.

4. Système selon la revendication 2 ou 3, dans lequel lesdits moyens de serrage (25) comprennent un élément de poussée (26) configuré pour se déplacer linéairement le long de la broche (24) respectives.

5. Système selon l'une des revendications 2 à 5, dans lequel ledit support (3) comprend des moyens de déplacement (16) configurés pour déplacer ladite partie mobile (13) par rapport à ladite structure externe (5).

6. Système selon la revendication 5, dans lequel lesdits moyens de déplacement (16) comprennent des éléments filetés.

7. Système selon la revendication 5 ou 6, dans lequel lesdits moyens de déplacement (16) comprennent une vis (17) portée par l'une entre ladite partie mobile (13) et ladite structure externe (5) et une vis à écrou (18) portée par l'autre entre ladite partie mobile (13) et ladite structure externe (5), ladite vis (17) et ladite vis à écrou (17, 18) coopérant l'une avec l'autre pour déplacer ladite partie mobile (13) par rapport à ladite structure externe (5).

8. Système selon l'une des revendications 1 à 7, dans lequel ladite structure externe (5) définit une paire de fentes (23) configurées pour loger lesdites broches (24) dans le déplacement de ladite partie mobile (13) le long dudit axe B par rapport à ladite structure externe (5), chacune desdites fentes définissant une course d'extrémité supérieure (23a) et une course d'extrémité inférieure (23b) configurées pour limiter ledit déplacement de ladite partie mobile (13) le long dudit axe B.

9. Système selon l'une des revendications 2 à 8, comprenant des moyens d'arrêt (35) configurés pour permettre sélectivement audit support (3) de sortir desdits guides (33) dudit élément de logement (4).

10. Système selon la revendication 10, dans lequel lesdits moyens d'arrêt (35) comprennent un volet (36) dimensionné de manière à permettre l'insertion dudit support (3) dans lesdits guides (32) lorsque lesdits moyens de serrage (25) ne sont pas serrés et à interdire la sortie dudit support (3) desdits guides (33) lorsque lesdits moyens de serrage (25) sont au moins partiellement serrés.

11. Système de support selon l'une des revendications précédentes, dans lequel ledit support (3) comprend un support rotatif (7) pour ledit arbre (2) et des moyens d'amortissement (8) interposés entre ledit support rotatif (7) et ladite structure externe (5).

12. Véhicule comprenant un châssis et un arbre (2) fixé audit châssis au moyen d'au moins un système de support selon l'une des revendications précédentes.

13. Méthode de montage d'un système d'arbres de rotation (2) à travers un système de support (1) selon l'une quelconque des revendications précédentes et comprenant les étapes suivantes :
• le positionnement de broches (24) dudit support (3) dans les guides (33) respectifs dudit élément de logement (4), en maintenant un châssis dudit véhicule retourné ;
• le serrage partiel des moyens de serrage (25) de sorte que les moyens de poussée (26) interdisent la sortie desdites broches (24) desdits guides (33) ;
• le retournement dudit châssis dudit véhicule ;
• le montage d'un moteur et d'une boîte de vitesses dudit véhicule sur ledit châssis ;
• le montage dudit système d'arbres de rotation (2) sur ledit moteur et ladite boîte de vitesses ;
• l'ajustement de jeux éventuels le long de l'axe A desdits arbres de rotation (2), le long de l'axe B et autour de l'axe C desdits supports (3) par rapport audit élément de logement (4) ; et
• le serrage complet desdits moyens de serrage (25) afin de verrouiller ledit support (3) par rapport audit élément de logement (4).

14. Méthode selon la revendication 13, comprenant en outre au moins l'une des étapes préliminaires suivantes :
• le montage dudit support (3) sur un arbre (2) ;
• l'enregistrement préalable de la hauteur dudit axe A par rapport à une valeur de tirage agissant sur lesdits moyens de déplacement (16).

15. Méthode selon la revendication 13 ou 14, dans laquelle ledit ajustement comprend au moins l'une des opérations suivantes :
• l'ajustement de la position desdites broches (24) le long desdits guides (33) ;
• l'ajustement de la position entre lesdites broches (24) et ledit élément (30) fixé audit châssis ;
• l'ajustement de l'inclinaison autour de l'axe C dudit support (3) par rapport audit élément de logement (4) .
